(19) Europäisches Patentamt
European Patent Office
Office européen des brevets

(11) **EP 1 423 190 B1**

(12) **EUROPÄISCHE PATENTSCHRIFT**

(45) Veröffentlichungstag und Bekanntmachung des Hinweises auf die Patenterteilung:
**15.08.2007** **Patentblatt 2007/33**

(21) Anmeldenummer: **01983509.9**

(22) Anmeldetag: **27.09.2001**

(51) Int Cl.:
*B01J 19/26* (2006.01)     *C01B 3/36* (2006.01)
*B01F 5/04* (2006.01)     *B01F 5/06* (2006.01)
*F23C 5/02* (2006.01)     *F23M 5/02* (2006.01)
*F23C 7/00* (2006.01)     *F23D 11/38* (2006.01)
*F23D 11/40* (2006.01)

(86) Internationale Anmeldenummer:
**PCT/EP2001/011216**

(87) Internationale Veröffentlichungsnummer:
**WO 2003/022422 (20.03.2003 Gazette 2003/12)**

(54) **SYSTEM ZUM UMSETZEN VON BRENNSTOFF UND LUFT ZU REFORMAT UND VERFAHREN ZUR MONTAGE EINES SOLCHEN SYSTEMS**

SYSTEM FOR CONVERTING FUEL AND AIR INTO REFORMATE AND METHOD FOR MOUNTING SUCH A SYSTEM

SYSTEME DE CONVERSION D'AIR ET DE CARBURANT EN REFORMAT ET SON PROCEDE DE MONTAGE

(84) Benannte Vertragsstaaten:
**DE**

(30) Priorität: **05.09.2001** **DE 10143461**
**10.09.2001** **DE 10144400**
**10.09.2001** **DE 10144408**
**10.09.2001** **DE 10144407**

(43) Veröffentlichungstag der Anmeldung:
**02.06.2004** **Patentblatt 2004/23**

(73) Patentinhaber: **Webasto AG**
**82131 Stockdorf (DE)**

(72) Erfinder:
• **WOLF, Felix**
**80687 München (DE)**
• **MITTMANN, Bernd**
**82110 Germering (DE)**
• **SALLINGER, Christine**
**85716 Unterschleissheim (DE)**
• **HUBBAUER, Christian**
**86633 Neuburg (DE)**
• **KERSCHER, Thomas**
**86576 Schiltberg (DE)**
• **BÄCKER, Christian**
**82256 Fürstenfeldbruck (DE)**
• **KUNZ, Stefan**
**82131 Stockdorf (DE)**
• **NEUMÜLLER, Marcus**
**82229 Hechendorf (DE)**
• **METZ, Florian**
**86415 Mering (DE)**
• **WEGNER, Martin**
**17034 Neubrandenburg (DE)**
• **LANZL, Ingrid**
**80333 München (DE)**
• **LAMP, Peter**
**86916 Kaufering (DE)**

(74) Vertreter: **Schumacher & Willsau**
**Patentanwaltssozietät**
**Nymphenburger Strasse 42**
**80335 München (DE)**

(56) Entgegenhaltungen:
EP-A- 0 777 084     WO-A-98/28493
FR-A- 1 066 117     FR-A- 2 226 055
GB-A- 739 699     US-A- 4 125 359
US-A- 4 396 372     US-A- 5 899 075
US-A- 5 997 596     US-B1- 6 276 924

• **DATABASE WPI Section Ch, Week 199039 Derwent Publications Ltd., London, GB; Class J02, AN 1990-296008 XP002199676 & SU 1 526 791 A (MECHANICS RES MOSCO), 7. Dezember 1989 (1989-12-07)**

**Beschreibung**

Die Erfindung betrifft ein System zum Umsetzen von Brennstoff und Luft zu Reformat nach dem Oberbegriff von Anspruch 1. Die Erfindung betrifft weiterhin ein Verfahren zur Montage eines solchen Systems.

Gattungsgemäße Systeme dienen der Umwandlung von chemischer Energie in elektrische Energie. Zu diesem Zweck werden dem Reformer Brennstoff und Luft, vorzugsweise in Form eines Brennstoff/Luft-Gemisches, zugeführt. In dem Reformer erfolgt dann eine Umsetzung des Brennstoffes mit dem Luftsauerstoff, wobei vorzugsweise das Verfahren der partiellen Oxidation durchgeführt wird.

Das so erzeugte Reformat wird dann einer Brennstoffzelle beziehungsweise einem Brennstoffzellenstack zugeführt, wobei durch die kontrollierte Umsetzung von Wasserstoff, als Bestandteil des Reformats, und Sauerstoff elektrische Energie freigesetzt wird.

Der Reformer kann, wie bereits erwähnt, so ausgelegt sein, dass das Verfahren der partiellen Oxidation durchgeführt wird, um Reformat zu erzeugen. In diesem Fall ist es bei der Verwendung von Diesel als Brennstoff besonders nützlich, vor der partiellen Oxidation Vorreaktionen durchzuführen. Auf diese Weise können mit "kalter Flamme" langkettige Dieselmoleküle in kürzerkettige Moleküle umgesetzt werden, was letztlich den Reformerbetrieb begünstigt. Allgemein wird der Reaktionszone des Reformers ein Gasgemisch zugeführt, welches zu $H_2$ und CO umgesetzt wird. Ein weiterer Bestandteil des Reformats sind $N_2$ aus der Luft sowie, in Abhängigkeit von der Luftzahl und der Temperatur, gegebenenfalls $CO_2$, $H_2O$ und $CH_4$. Im Normalbetrieb wird der Brennstoffmassenstrom entsprechend der angeforderten Leistung geregelt, und der Luftmassenstrom wird auf eine Luftzahl im Bereich von $\lambda = 0,4$ geregelt. Die Reformierungsreaktion kann durch unterschiedliche Sensoren, beispielsweise Temperatursensoren und Gassensoren, überwacht werden.

Neben dem Verfahren der partiellen Oxidation ist es ebenfalls möglich, eine autotherme Reformierung durchzuführen. Das Verfahren der partiellen Oxidation wird im Gegensatz zur autothermen Reformierung dadurch herbeigeführt, dass Sauerstoff unterstöchiometrisch zugeführt wird. Beispielsweise hat das Gemisch eine Luftzahl von $\lambda = 0,4$. Die partielle Oxidation ist exotherm, so dass es in problematischer Weise zu einer unerwünschten Aufheizung des Reformers kommen kann. Ferner neigt die partielle Oxidation zu einer verstärkten Rußbildung. Zur Vermeidung der Rußbildung kann die Luftzahl $\lambda$ kleiner gewählt werden. Dies wird so erreicht, dass ein Teil des für die Oxidation verwendeten Sauerstoffs durch Wasserdampf bereitgestellt wird. Da die Oxidation mit Wasserdampf endotherm verläuft, ist es möglich, das Verhältnis zwischen Brennstoff, Sauerstoff und Wasserdampf so einzustellen, dass insgesamt weder Wärme freigesetzt noch Wärme verbraucht wird. Die so erreichte autotherme Reformierung beseitigt daher die Probleme der Rußbildung und einer unerwünschten Überhitzung des Reformers.

Ebenfalls ist es möglich, dass im Anschluss an die Oxidation in dem Reformer weitere Schritte der Gasbehandlung erfolgen, wobei insbesondere der partiellen Oxidation eine Metanisierung nachgeschaltet sein kann.

Ein gängiges Brennstoffzellensystem ist beispielsweise ein PEM-System ("proton exchange membrane"), welches typischerweise bei Betriebstemperaturen zwischen Raumtemperatur und etwa 100 °C betrieben werden kann. Aufgrund der niedrigen Betriebstemperaturen wird dieser Brennstoffzellentyp häufig für mobile Anwendungen genutzt, beispielsweise in Kraftfahrzeugen.

Weiterhin sind Hochtemperaturbrennstoffzellen bekannt, sogenannte SOFC-Systeme ("solid oxide fuel cell"). Diese Systeme arbeiten beispielsweise im Temperaturbereich von zirka 800 °C, wobei ein Feststoffelektrolyt ("solid oxide") in der Lage ist, den Transport von Sauerstoffionen zu übernehmen. Der Vorteil von derartigen Hochtemperaturbrennstoffzellen gegenüber PEM-Systemen besteht insbesondere in der Robustheit gegenüber mechanischen und chemischen Belastungen.

Als Anwendungsgebiet für Brennstoffzellen in Verbindung mit den gattungsgemäßen Systemen kommen neben stationären Anwendungen insbesondere Anwendungen im Kraftfahrzeugbereich in Frage, beispielsweise als "auxiliary power unit" (APU).

Für einen zuverlässigen Betrieb des Reformers ist es wichtig, den Brennstoff beziehungsweise das Brennstoff/Luft-Gemisch in geeigneter Weise dem Reaktionsraum des Reformers zuzuführen. Beispielsweise sind eine gute Vermischung von Brennstoff und Luft und eine gute Verteilung des Brennstoff/Luft-Gemisches in dem Reaktionsraum des Reformers für die Funktion des Reformers vorteilhaft. Im Rahmen der vorliegenden Offenbarung ist stets von einem Brennstoff/Luft-Gemisch die Rede, wenn die in den Reaktionsraum des Reformers einzubringenden beziehungsweise eingebrachten Substanzen angesprochen werden. Die eingebrachten Substanzen sind jedoch nicht auf ein Gemisch aus Brennstoff und Luft beschränkt. Vielmehr können auch andere Substanzen zusätzlich eingebracht werden, beispielsweise Wasserdampf im Falle der autothermen Reformierung. Insofern ist der Begriff Brennstoff/Luft-Gemisch in dieser allgemeineren Form zu verstehen.

Die US 4,059,415 beschreibt einen Reformer.

Einer Venturidüse ist eine Drellkammer vorgelagert.

Der Erfindung liegt die Aufgabe zugrunde, ein System zum Umsetzen von Brennstoff und Luft zu Reformat zur Verfügung zu stellen, welches vorteilhafte Eigenschaften im Hinblick auf ihre Herstellung und Toleranzen bezüglich eines Drallzerführung aufweist Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen System durch die Merkmale des kennzeichnenden Teils von Anpruch 1 auf. Im Rahmen der vorliegenden Offenbarung ist der Begriff Lufteintrittsbereich sehr allgemein zu verstehen. Zum einen kann beispielsweise ein zylindrischer Teil des Strömungsweges durch die Venturidüse gemeint sein. Es kann aber auch ein Bereich außerhalb der Venturidüse als Lufteintrittsbereich bezeichnet sein. Was im Einzelnen gemeint ist, ergibt sich jeweils aus dem Zusammenhang. Durch das Verdrallen der in die Düse eintretenden Luft im Lufteintrittsbereich kann die Zerstäubungsqualität und damit die Funktion des Reformers deutlich verbessert werden. Der Grund hierfür liegt darin, dass die Luftgeschwindigkeit aufgrund einer ausgeprägten Tangentialbewegungskomponente vergrößert wird. Weiterhin wird eine kostengünstig herzustellende Düse zur Verfügung gestellt. Das keramische Material lässt sich in einfacher Weise bearbeiten, wobei zahlreiche Varianten im Hinblick auf die Formgebung möglich sind. Insbesondere können die Mittel zur Luftführung, die der Luft außerhalb des Lufteintrittsbereiches einen Drall zuführen, einstückig mit der Düse ausgebildet werden. Aufgrund der Verwendung einer Keramik besteht der weitere Vorteil, dass der Bereich der Düse um eine in der Düse angeordneten Brennstoffnadel keine zu hohen Temperaturen annimmt, so dass es nicht zu einer Entzündung von eventuell aus der Düse austretenden Brennstoffmengen kommen kann. Durch die einstückige Ausbildung der Mittel zur Luftführung können Toleranzen in einfacher Weise eingehalten werden, da eine falsche Justierung der Mittel zur Luftführung beim Zusammenbau des Reformers nicht mehr möglich ist. Eine solche Venturidüse bewirkt ein hohes axiales Luftdruckgefälle, so dass in vorteilhafter Weise Brennluft angesaugt und im Diffusorbereich mit Brennstoff vermischt werden kann. Im Lufteintrittsbereich beziehungsweise in dem Bereich, in dem der Düse Brennstoff zugeführt wird, hat die in die Düse einströmende Luft eine hohe Geschwindigkeit und einen demzufolge geringen Druck. Die hohe Strömungsgeschwindigkeit der Luft begünstigt die Aufnahme des Brennstoffes durch die einströmende Luft. Beim nachfolgenden Durchströmen des Brennstoff/Luft-Gemisches durch den Diffusorbereich der Venturidüse kommt es zu einem Druckrückgewinn, so dass das Gemisch mit ausreichendem Druck in den Brennraum des Reformers einströmen kann. Weiterhin findet in dem Diffusorbereich eine vorteilhafte Durchmischung von Brennstoff und Luft statt. Somit ist eine wirkungsvolle und kostengünstige Möglichkeit geschaffen, ein Brennstoff/Luft-Gemisch in einen Reformer einzubringen. Der Montageaufwand und die Herstellungskosten können durch die Wahl unterschiedlicher Ausführungsformen positiv beeinflusst werden. Beispielsweise ist es denkbar, zumindest einen Teil des Diffusorbereiches einstückig mit dem Reformer beziehungsweise dem Reformergehäuse beziehungsweise dem Gehäuse des Reaktionsraums auszubilden. Es ist aber auch denkbar, die Düse als Ganzes unabhängig von dem Reformer zu gestalten und zu verwenden.

In, diesem Zusammenhang ist es als besonders vorteilhaft zu verzeichnen, wenn die Mittel zur Luftführung eine luftführende Einrichtung mit Drallschaufeln umfassen. Eine solche luftführende Einrichtung als separates Bauteil kann unabhängig von der Düse gefertigt und auf diese aufgesetzt werden.

In diesem Fall ist vorgesehen, dass die Drallschaufeln auf einem an einem Düsenstock angebrachten Träger angeordnet sind und dass jeweils zwei Drallschaufeln zusammen mit dem Träger und dem Düsenstock einen konischen Kanal bilden. Je nach Winkelstellung dieser Drallschaufeln zu einer jeweils radialen Ebene kann der Tangentialluftanteil und somit der Düsenluftdrall eingestellt werden. Dabei können die Drallschaufeln annähernd radial oder zu den Radien geneigt angeordnet sein. Die Drallschaufeln können in Strömungsrichtung eben oder gekrümmt gebildet sein.

Ebenfalls ist es möglich, dass die luftleitende Einrichtung eine an dem Düsenstock befestigte topfförmige Hülse mit darin ausgebildeten axialen Luftöffnungen und in einer Umfangswand gebildeten Umfangsluftöffnungen aufweist. Auch auf diese Weise ist es möglich, der in die Düse einströmenden Luft einen definierten Drall zu vermitteln.

In diesem Zusammenhang ist es möglich, dass die Umfangsluftöffnungen nahezu tangential zur Umfangswand gebildete Bohrungen sind. Durch die tangentiale Anordnung der Bohrungen ist es ohne weitere Hilfsmittel möglich, der Luft einen Drall zuzuführen.

Weiterhin kann aber auch vorgesehen sein, dass an den Umfangsluftöffnungen Luftleitschaufeln angeordnet sind. Es ist also nicht erforderlich, den Drall durch die Umfangsluftöffnung unmittelbar zu vermitteln. Vielmehr ist es denkbar die Luft durch beliebig ausgebildete Umfangsluftöffnungen einströmen zu lassen und nachfolgend den Drall durch Luftleitschaufeln zu vermitteln.

Es kann in vorteilhafter Weise vorgesehen sein, dass der Öffnungswinkel des Diffusorbereiches veränderlich ist. Auch wenn im einfachsten Fall der Diffusorbereich einen einheitlichen Öffnungswinkel hat, kann es insbesondere für die Anbindung des Diffusorteils an den Reaktionsraum nützlich sein, im Eintrittsbereich in die Brennkammer einen größeren Öffnungswinkel vorzusehen. Dies unterstützt die gleichmäßige Verteilung des Brennstoff/Luft-Gemisches in dem Reaktionsraum, während der Öffnungswinkel des weiter stromaufwärts liegenden Teils des Diffusorbereiches im Hinblick auf das Strömungsverhalten in diesem Bereich optimiert werden kann.

Das erfindungsgemäße System ist in besonders vorteilhafter Weise dadurch weitergebildet, dass der Venturidüse flüssiger Brennstoff in der Nähe des Lufteintrittsbereiches durch eine Nadel zugeführt wird. Diese Brennstoffnadel wird über eine Brennstoffleitung mit Brennstoff versorgt. Aufgrund der hohen Strömungsgeschwindigkeit der einströmenden Luft wird der aus der Brennstoffnadel annähernd drucklos austretende Brennstoff in Fäden gezogen, die dann in Tröpfchen zerfallen. Die für eine gute Zerstäubung erforderlichen hohen Luftgeschwindigkeiten im Lufteintrittsbereich lassen sich dort aufgrund des vorteilhaften Druckrückgewinns des Diffusors erzielen.

Ebenfalls kann das erfindungsgemäße System in besonders vorteilhafter Weise dadurch weitergebildet sein, dass die Brennstoffzuführung ein Rohr und eine Zweistoffdüse umfasst, so dass der Venturidüse ein Brennstoff/Luft-Gemisch zugeführt wird. Es findet also vor dem Eintritt von Brennstoff in die Venturidüse bereits eine Vermischung des Brennstoffes mit Luft statt, was vorteilhaft für ein zuverlässiges Vermischen sein kann.

In diesem Zusammenhang kann vorgesehen sein, dass die Zweistoffdüse eine weitere Venturidüse ist. Innerhalb der im Rahmen der vorliegenden Erfindung verwendeten Venturidüse, die auch als Venturirohr bezeichnet werden kann, ist eine kleinere Venturidüse mit einer darin angeordneten Brennstoffnadel vorgesehen. In der kleineren Venturidüse findet ein Austreten des Brennstoffs aus der Brennstoffnadel und eine Vorvermischung statt. Das Brennstoff/Luft-Gemisch tritt dann in das Venturirohr, das heißt die erfindungsgemäße Venturidüse, ein, und wird dort weitervermischt, um schließlich in den Reaktionsraum einzutreten.

Es ist besonders zu bevorzugen, dass Mittel vorgesehen sind, so dass in den Reaktionsraum Sekundärluft einströmen kann. Die durch die Venturidüse in den Reaktionsraum eintretende Luft, das heißt die im Brennstoff/Luft-Gemisch vorhandene Luft kann in diesem Zusammenhang als Primärluft bezeichnet werden. Die Sekundärluft wird vorteilhafterweise durch Sekundärluftbohrungen im Gehäuse des Reaktionsraums gefördert. Die Aufteilung der Luft in Primärluft und Sekundärluft kann nützlich sein, um am Austritt der Düse ein fettes, zündwilliges Gemisch bereitzustellen. Dies ist insbesondere beim Startvorgang des Systems nützlich, da hier der Reformer in vorteilhafter Weise nach Art eines Brenners arbeitet.

Das erfindungsgemäße System ist weiterhin in besonders vorteilhafter Weise dadurch weitergebildet, dass die Brennstoffzuführung eine Brennstoffnadel umfasst und dass für das Verhältnis von Innendurchmesser $d_i$ zu Außendurchmesser $d_a$ der Brennstoffnadel gilt:

$$0{,}7 \leq \frac{d_i}{d_a} < 1.$$

Die Brennstoffnadel ist also extrem dünnwandig ausgestaltet, so dass bei gegebenem Brennstoffdurchsatz, das heißt gegebenem Innendurchmesser, ein möglichst geringer Außendurchmesser sichergestellt wird. Dies führt letztlich dazu, dass ein besonders geringes Strömungshindernis aufgrund der Anwesenheit der Nadel vorliegt. Der angegebene Toleranzbereich ist so gewählt, dass die Nadel noch ohne größere Schwierigkeiten gefertigt werden kann, wobei das der vorliegenden Erfindung zugrunde liegende Prinzip umso besser erfüllt wird, je mehr sich das Verhältnis von Innendurchmesser zu Außendurchmesser der Brennstoffnadel dem Wert 1 nähert.

Das erfindungsgemäße System ist in besonders vorteilhafter Weise dadurch weitergebildet, dass die Venturidüse axialsymmetrisch ist und dass die Brennstoffnadel axial ausgerichtet ist. Durch die axiale Ausrichtung der Brennstoffnadel bietet diese einen geringen Strömungswiderstand für die Brennluft. Ist man jedoch bestrebt, den Brennstoff in einem gewissen Winkel in den Strömungsbereich der Venturidüse einzubringen, so ist es ebenfalls möglich, die Brennstoffnadel gegen die Achse der Venturidüse zu kippen. Auch in diesem Fall trägt das angegebene nützliche Verhältnis zwischen Innendurchmesser und Außendurchmesser zu einer Minimierung des Strömungswiderstandes bei.

Weiterhin kann nützlich sein, dass die Austrittsebene des flüssigen Brennstoffs aus der Brennstoffnadel senkrecht zur Strömungsrichtung des flüssigen Brennstoffs durch die Brennstoffnadel verläuft. Auf diese Weise ergibt sich unter Vernachlässigung der Schwerkraft ein axialsymmetrischer Austritt des Brennstoffs aus der Brennstoffnadel.

Es kann aber auch nützlich sein, dass die Austrittsebene des flüssigen Brennstoffs aus der Brennstoffnadel schräg zur Strömungsrichtung des flüssigen Brennstoffs durch die Brennstoffnadel verläuft. Auf diese Weise lässt sich eine Vorzugsrichtung beim Austritt des Brennstoffs aus der Brennstoffnadel realisieren, ohne die Brennstoffnadel insgesamt gegen die Achse der Venturidüse zu kippen. Durch den schrägen Anschnitt der Brennstoffnadel im Austrittsbereich lässt sich also eine Vergrößerung des Strömungswiderstandes aufgrund gekippter Brennstoffnadel vermeiden, wobei dennoch ein beispielsweise gegen die Schwerkraft gerichtetes Austreten des Brennstoffs aus der Brennstoffnadel möglich ist.

Des Weiteren ist es möglich, dass die Austrittsöffnung der Brennstoffnadel mit Spitzen und/oder Zinnen versehen ist. Auf diese Weise wird ermöglicht, dass der Brennstoff in großer radialer Ausdehnung in die Brennkammer eingebracht wird, was bei Öffnungen ohne eine Struktur am Rand des Austritts aufgrund von Einschnüreffekten mitunter nicht in optimaler Weise erreichbar ist.

Das erfindungsgemäße System ist weiterhin in bevorzugter Weise dadurch weitergebildet, dass der Lufteintrittsbereich einen im Wesentlichen zylindrischen Teil aufweist, der einen Übergang zu dem Diffusorbereich aufweist, dass die Austrittsöffnung der Brennstoffnadel in dem zylindrischen Teil angeordnet ist und dass ein axialer Abstand zwischen der Austrittsöffnung der Brennstoffnadel und dem Übergang vorliegt. Auf diese Weise wird sichergestellt, dass der flüssige Brennstoff, der aus der Austrittsöffnung der Brennstoffnadel ausgetreten ist, noch über eine gewisse Strecke durch einen Bereich großer Strömungsgeschwindigkeit zusammen mit der einströmenden Luft transportiert wird. Dies stellt eine besonders gute Zerstäubung sicher. In den meisten Fällen wird es sinnvoll sein, den Austritt aus der Brennstoffnadel am Anfang des zylindrischen Teils des Lufteintrittsbereiches der Venturidüse einzuordnen, so dass praktisch der gesamte zylindrische Bereich für eine - gute Verteilung des zerstäubten Brennstoffes in der schnell strömenden Brennluft zur Verfügung steht.

Weiterhin ist das erfindungsgemäße System vorteilhaft dadurch weitergebildet, dass es bezüglich mindestens einer Einbaumöglichkeit des Reformers in ein Kraftfahrzeug so ausgelegt ist, dass sich die Öffnung der Brennstoffnadel oberhalb der Achse der Venturidüse befindet. Durch diesen Umstand ist es möglich, die Brennstoffnadel parallel zur Achse der Venturidüse anzuordnen und gleichzeitig einem Schwerkrafteffekt entgegenzuwirken. Wählt man bei einer möglichen Einbaulage des Reformers die Einbaulage der Brennstoffnadel bezüglich der Venturidüsenachse so, dass sie von der Achse radial nach oben verschoben ist und dann noch in Umfangsrichtung, so können zwei Einbaulagen des Reformers gestattet sein, wobei bei beiden Einbaulagen der günstige Ausgleich der Schwerkraft durch die Lage der Öffnung oberhalb der Achse der Venturidüse stattfindet.

Die Erfindung ist in vorteilhafter Weise dadurch weitergebildet, dass die Düse Mittel zum Halten eines Glühstifts aufweist. Die Positionierung des Glühstiftes bezüglich der Düse ist ein wichtiger Parameter im Hinblick auf ein gutes Startverhalten des Reformers. Bei Heizgeräten des Standes der Technik wurde der Glühstift im Allgemeinen durch das Reformergehäuse gehalten, so dass sich hierdurch Positionierungsschwankungen bezüglich der Düse ergeben konnten. Durch die Eigenschaft der erfindungsgemäßen Düse, dass die Düse selbst Mittel zum Halten des Glühstifts aufweist, können derartige Toleranzen ausgeschlossen werden. Der Glühstift hat stets dieselbe Position bezüglich der Düse.

Weiterhin ist die erfindungsgemäße Düse in vorteilhafter Weise dadurch weitergebildet, dass die Düse zumindest teilweise eine im Wesentlichen zylindrische Gestalt hat und dass die Mittel zur Luftführung Kanäle bilden, die bezüglich der radialen Richtungen versetzt sind. Die senkrecht zur Achse der Düse einströmende Luft wird also nicht radial zugeführt sondern mit einem Versatz. Dieser Versatz bestimmt den Drall, der der Luft zugeführt wird, damit das Strömungsverhalten und letztlich auch die Eigenschaften und die Qualität der Verbrennung.

Besonders nützlich ist es, dass die Mittel zur Luftführung im Wesentlichen dreieckige Grundflächen aufweisen, wobei die Ecken abgerundet sind. Hierdurch lässt sich der Kanalversatz in einfacher Weise realisieren. Die Abrundung der Ecken ist vorteilhaft für ein gleichmäßiges Strömungsverhalten.

In einer weiteren bevorzugten Ausführungsform der vorliegenden Erfindung ist vorgesehen, dass die Mittel zum Halten des Glühstifts als schräg zur Zylinderachse verlaufende Bohrung realisiert sind. Der Glühstift muss dann zur geeigneten Positionierung lediglich in die Bohrung eingeführt werden. Ein Anschlag am Glühstift und/oder innerhalb der Bohrung sorgt dafür, dass der Glühstift bezüglich der Düse in seine optimale Position geführt wird.

Die erfindungsgemäße Düse ist in besonders vorteilhafter Weise dadurch weitergebildet, dass ein zumindest im Wesentlichen zylindrischer Teil der Düse einen im Wesentlichen zylindrischen Ansatz mit vergrößertem Durchmesser aufweist und dass die Mittel zum Halten des Glühstifts als schräg zur Zylinderachse verlaufende, den Ansatz durchdringende Bohrung realisiert sind. Auf diese Weise kann der Glühstift in einem Bereich gehalten werden, so dass er das Strömungsverhalten des einströmenden Brennstoff/Luft-Gemisches möglichst wenig beeinflusst. Durch den zylindrischen Ansatz, der einen größeren Durchmesser als der restliche Düsenkörper aufweist, ist dies in einfacher Weise zu bewerkstelligen.

Ebenfalls ist in besonders vorteilhafter Weise vorgesehen, dass ein zumindest im Wesentlichen zylindrischer Teil der Düse einen im Wesentlichen zylindrischen Ansatz mit vergrößertem Durchmesser aufweist und dass der zylindrische Ansatz Ausnehmungen zur Aufnahme von Montagebolzen aufweist. Diese Montagebolzen können beispielsweise an einem Hitzeschild des Reformers fest angebracht sein. Die relative Positionierung der Düse ist auf diese Weise durch die Ausnehmungen in dem Ansatz und die Position der Montagebolzen festgelegt. Damit ist die Montage besonders einfach und mit nur geringen Toleranzen möglich.

In einer weiteren bevorzugten Ausführungsform kann das erfindungsgemäße System so weitergebildet sein, dass der Reformer, die Düse und die Brennstoffzufuhr auf einer Achse angeordnet sind, dass Mittel zum Halten der Düse und der Brennstoffzufuhr vorgesehen sind, dass mindestens zwei axial ausgerichtete Montagebolzen vorgesehen sind, die an dem Reformer befestigt sind, dass die Düse und die Brennstoffzufuhr Positioniereinrichtungen umfassen, die mit den Montagebolzen zusammenwirken, dass die Mittel zum Halten der Komponenten mit den Montagebolzen zusammenwirken und dass der Reformer, die Düse, die Brennstoffzufuhr und die Mittel zum Halten der Komponenten axial aufeinanderfolgend angeordnet sind. Auf diese Weise orientieren sich alle Positionierungen der Komponenten an den Montagebolzen, so dass enge Toleranzen eingehalten werden können. Die Brennstoffnadel ist bezüglich der Düse äußerst genau positioniert. Ferner wird auch die Positionierung des für das Startverhalten erforderlichen Glühstiftes durch die Positionen der Montagebolzen vorgegeben. Letztlich erhält man einen stabilen Aufbau, der einen Reformerbetrieb mit hoher Qualität sicherstellt.

Die erfindungsgemäße Vorrichtung ist in vorteilhafter Weise dadurch weitergebildet, dass die Mittel zum Halten der Komponenten als Feder ausgebildet sind, die auf den Montagebolzen durch Klemmscheiben gehalten wird. Eine Befestigung mit einer derartigen Feder hat den Vorteil, dass mechanische Spannungen, insbesondere aufgrund von Temperatureffekten, ausgeglichen werden können. Bei Systemen des Standes der Technik konnten durch mechanische Spannungen unerwünscht hohe Kräfte auf den Reformer und auf einen gegebenenfalls vorgesehenen Hitzeschild des Reformers wirken, wodurch dieser letztlich verformt wurde.

Weiterhin ist in vorteilhafter Weise vorgesehen, dass die Montagebolzen an dem Reformer angeschweißt sind. Auf diese Weise sind die Montagebolzen in definierter Position bezüglich des Reformers fest mit diesem verbunden.

Weiterhin ist es besonders bevorzugt, dass zwischen Düse und Reformer eine Dichtung vorgesehen ist. Diese dient sowohl der thermischen Isolierung als auch der Anpassung der Düse an den Hitzeschild des Reformers.

Es ist weiterhin in vorteilhafter Weise vorgesehen, dass die Dichtung mindestens eine dem Reformer zugewandte Glimmerschicht und mindestens eine der Düse zugewandte Grafitschicht aufweist. Dies stellt die genannten vorteilhaften Eigenschaften der Dichtung in besonders zuverlässiger Weise zur Verfügung.

Es kann weiterhin in vorteilhafter Weise vorgesehen sein, dass die Brennstoffzufuhr ein Metallgestrick aufweist. Dieses dient der Zerschlagung von Blasen im Brennstoff. Ferner wird hierdurch ein Gegendruck für einen gegebenenfalls an der Brennstoffleitung angeordneten Dämpfer zur Verfügung gestellt.

Die Erfindung besteht weiterhin in einem Verfahren zur Montage eines Systems zum Umsetzen von Brennstoff und Luft zu Reformat, wobei mindestens zwei Montagebolzen vorgesehen sind, bei dem eine Düse in axialer Richtung auf die Montagebolzen geführt wird, eine Brennstoffzufuhr in axialer Richtung auf die Montagebolzen geführt wird und Mittel zum Halten der Komponenten in axialer Richtung auf die Montagebolzen geführt werden. Ein solches Verfahren ist in besonders einfacher Weise realisierbar, da alle Komponenten in axialer Richtung zugeführt werden. Insbesondere ist das Verfahren automatisierbar, so dass große Stückzahlen in kurzer Zeit herstellbar sind.

Das Verfahren ist in vorteilhafter Weise dadurch weitergebildet, dass vor dem Führen der Düse auf die Montagebolzen eine Dichtung in axialer Richtung auf die Montagebolzen geführt wird. Die mit den oben beschriebenen Vorteilen ausgestattete Vorrichtung mit Dichtung kann somit ebenfalls in den Prozess integriert werden, insbesondere da auch die Dichtung in axialer Richtung auf die Montagebolzen geführt wird.

Das erfindungsgemäße Verfahren ist weiterhin dadurch vorteilhaft, dass als Mittel zum Halten der Komponenten eine Feder verwendet wird und dass die Feder unter Mitwirkung von Klemmscheiben, die die Feder in ihrer Endposition fixieren, kraftgesteuert auf die Montagebolzen geführt wird. Somit können im Hinblick auf die Wärme- und Temperatureigenschaften des Aufbaus innerhalb einer Serie einheitliche Voraussetzungen geschaffen werden. Vermittelt durch die Federkraft können Toleranzen aufgrund unterschiedlicher Erwärmungen der Komponenten, unterschiedlicher Endtemperaturen der Komponenten und unterschiedlicher Temperaturausdehnungskoeffizienten ausgeglichen werden.

Der Erfindung liegt die Erkenntnis zugrunde, dass es erhebliche Vorteile mit sich bringt, eine Venturidüse zu verwenden, um ein Brennstoff/Luft-Gemisch in einen Reformer einzubringen. Eine Venturidüse bietet beispielsweise die Möglichkeit, flüssigen Brennstoff besonders effizient in Bereichen hoher Strömungsgeschwindigkeit in einströmende Luft aufzunehmen, wobei nachfolgend ein ausreichender Druckaufbau sichergestellt ist, um das Brennstoff/Luft-Gemisch in den Reformer einzubringen. Eine Venturidüse ist in zahlreichen Ausführungsformen kostengünstig herzustellen. Weiterhin ergeben sich besonders rationelle Montageverfahren für erfindungsgemäße Systeme.

Die Erfindung wird mit Bezug auf die beigleitenden Zeichnungen anhand bevorzugter Ausführungsformen beispielhaft erläutert.

Es zeigen:

Figur 1      ein schematisches Blockschaltbild eines Systems, bei dem die vorliegende Erfindung einsetzbar ist;

Figur 2      eine schematische Schnittansicht einer Ausführungsform eines erfindungsgemäßen Systems;

Figur 3      eine schematische Schnittansicht einer weiteren Ausführungs-form eines efindungsgemäßen Systems;

Figur 4      ein Diagramm zur Erläuterung des axialen Druckverlaufs in einer Venturidüse;

Figur 5      eine schematische Schnittansicht einer weiteren Ausführungsform eines erfindungsgemäßen Systems;

Figur 6      eine perspektivische Darstellung eines Trägers mit einer luftleitenden Einrichtung zur Verwendung in einem erfindungsgemäßen System;

Figur 7      eine schematische Schnittansicht einer weiteren Ausführungsform eines erfindungsgemäßen Systems;

Figur 8      eine schematische Schnittansicht entlang der in Figur 7 mit A-A gekennzeichneten Querschnittsebene;

Figur 9      eine schematische Schnittansicht, entsprechend dem Schnitt gemäß Figur 8, einer weiteren Ausführungsform einer luftleitenden Einrichtung;

Figur 10      eine schematische Schnittansicht einer weiteren Ausführungsform eines erfindungsge-

Figur 11   eine Schnittansicht entlang der in Figur 10 mit B-B gekennzeichneten Ebene;

Figur 12   eine Brennstoffnadel mit einer ersten Austrittsöffnung zur Verwendung in einem erfindungsgemäßen System;

Figur 13   eine Brennstoffnadel mit einer zweiten Austrittsöffnung zur Verwendung in einem erfindungsgemäßen System;

Figur 14   eine Brennstoffnadel mit einer dritten Austrittsöffnung zur Verwendung in einem erfindungsgemäßen System;

Figur 15   eine teilweise geschnittene Seitenansicht einer Ausführungs-form einer Düse zur Verwendung in einem erfindungsgemäßen System;

Figur 16   eine Draufsicht auf den Lufteintrittsbereich einer Düse zur Verwendung in einem erfindungsgemäßen System; und

Figur 17   eine schematische Schnittansicht einer weiteren Ausführungsform eines erfindungsgemäßen Systems.

Bei der nachfolgenden Beschreibung der Zeichnungen bezeichnen gleiche Bezugszeichen gleiche oder vergleichbare Komponenten.

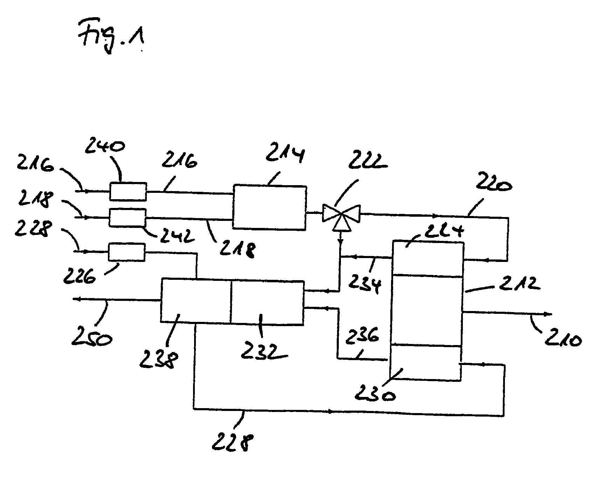

Figur 1 zeigt ein schematisches Blockschaltbild eines Systems, bei dem die vorliegende Erfindung einsetzbar ist. Über eine Pumpe 240 wird einem Reformer 214 Brennstoff 216 zugeführt. Dem Reformer 214 wird weiterhin über ein Gebläse 242 Luft 218 zugeführt. Das in dem Reformer 214 erzeugte Reformat 220 gelangt über eine Ventileinrichtung 222 zur Anode 224 einer Brennstoffzelle 212. Der Kathode 230 der Brennstoffzelle 212 wird über ein Gebläse 226 Kathodenzuluft 228 zugeführt. Die Brennstoffzelle 212 erzeugt elektrische Energie 210. Das Anodenabgas 234 und die Kathodenabluft 236 werden einem Brenner 232 zugeführt. Ebenfalls kann dem Brenner 232 über die Ventileinrichtung 222 Reformat zugeführt werden. Die in dem Brenner 232 erzeugte Wärmeenergie kann in einem Wärmetauscher 238 der Kathodenzuluft 228 zugeführt werden, so dass diese vorgewärmt wird. Aus dem Wärmetauscher 238 strömt Abgas 250 aus.

Das im Zusammenhang mit den nachfolgend beschriebenen Figuren dargestellte System kann verwendet werden, um dem Reformer 214 ein Brennstoff/Luft-Gemisch zuzuführen.

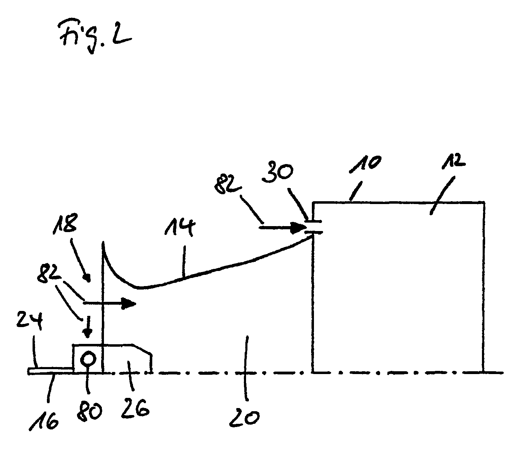

Figur 2 zeigt eine schematische Schnittansicht einer Ausführungsform eines erfindungsgemäßen Systems. Das System umfasst einen Reformer 10 mit einem Reaktionsraum 12. An dem Reformer 10 ist eine Venturidüse 14 angeschlossen. Diese weist einen Lufteintrittsbereich 18 und einen Diffusor 20 auf, dessen Querschnitt sich in Richtung auf den Reformer 10 vergrößert. Innerhalb der Venturidüse 14 befindet sich in der Nähe des Lufteintrittsbereiches 18 eine Brennstoffzuführung 16. Diese umfasst ein Rohr 24 zum Zuführen von Brennstoff sowie eine Zweistoffdüse 26. Die Zweistoffdüse 26 ist mit einer Öffnung 80 ausgestattet, in welche Luft 82 einströmen kann. Diese vermischt sich innerhalb der Zweistoffdüse 26 mit dem von dem Rohr 24 zugeführten Brennstoff. Aus der stromabwärtsgelegenen Öffnung der Zweistoffdüse 26 kann dann ein Brennstoff/Luft-Gemisch austreten, welches von Luft 82, die in den Lufteintrittsbereich 18 der Venturidüse 14 eintritt, mitgenommen wird. Das Brennstoff/Luft-Gemisch vermischt sich mit der in den Lufteintrittsbereich 18 der Venturidüse 14 eingeströmten Luft 82, und das so entstehende Brennstoff/Luft-Gemisch gelangt über den Diffusor 20 in den Reaktionsraum 12 des Reformers 10. Weiterhin ist es möglich, eine Öffnung 30 zu dem Reaktionsraum 12 des Reformers 10 vorzusehen, durch die Sekundärluft 82 in den Reaktionsraum 12 eintreten kann.

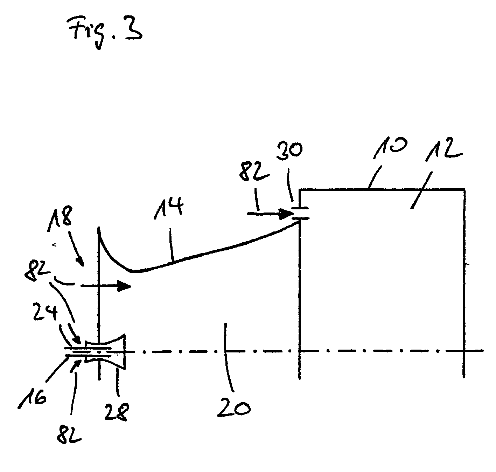

Figur 3 zeigt eine schematische Schnittansicht einer weiteren Ausführungsform eines erfindungsgemäßen Systems. Die Brennstoffzuführung 16 ist bei dem in Figur 3 dargestellten System anders als bei dem System gemäß Figur 2. Der Brennstoff wird zunächst wiederum über ein Rohr 24 zugeführt, gelangt dann jedoch in eine weitere Venturidüse 28, die wesentlich kleiner ist als die Venturidüse 14. In der Venturidüse 28 wird der flüssige Brennstoff durch die mit hoher Geschwindigkeit an der Austrittsöffnung des Rohrs 24 vorbeiströmende Luft 82 aufgenommen und zerstäubt. Das so entstehende Brennstoff/Luft-Gemisch wird dann durch die Luft 82, die in dem Lufteintrittsbereich 18 der Venturidüse 14 einströmt, mitgenommen, so dass es sich mit dieser vermischen kann.

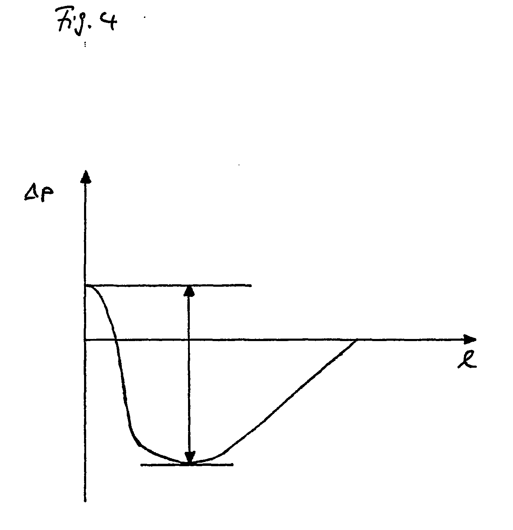

Figur 4 zeigt ein Diagramm zur Erläuterung des axialen Druckverlaufs in einer Venturidüse. Es ist eine Druckdifferenz $\Delta p$ zwischen dem Druck an einer bestimmten Koordinate I und dem Druck in dem Reaktionsraum 12 (siehe Figuren 2 und 3) aufgetragen. Die Luft 82 wird in den Lufteintrittsbereich 18 der Venturidüse 14 im Allgemeinen durch ein (nicht dargestelltes) Gebläse eingespeist, wobei diese Luft nur mit einem geringen Überdruck bereitgestellt wird. Aufgrund der Geschwindigkeitserhöhung der einströmenden Luft verringert sich der Druck bis auf einen Minimalwert. Im weiteren Verlauf der Luftströmung durch den Diffusor der Venturidüse nimmt die Strömungsgeschwindigkeit wieder ab und der Druck erhöht sich allmählich auf Reaktionskammerdruck.

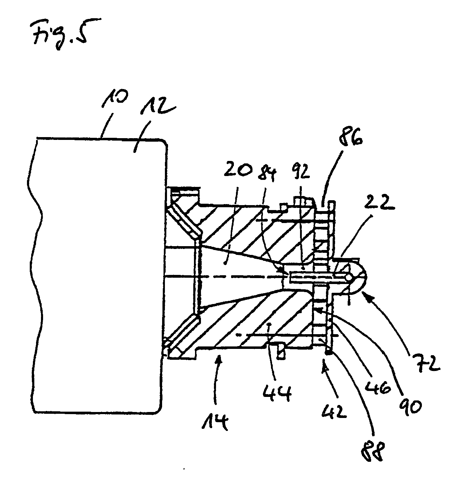

Figur 5 zeigt eine schematische Schnittansicht einer weiteren Ausführungsform eines erfindungsgemäßen Systems. Das System umfasst eine Venturidüse 14 mit einem Düsenstock 44. Weiterhin ist eine Brennstoffzufuhr 72 zum Zuführen von flüssigem Brennstoff in die Düse 14 vorgesehen. Der Brennstoff wird dem Lufteinströmbereich 92 über einen Brennstoffaustritt 84 einer Brennstoffnadel 22 zugeführt, dort von einströmender Luft mitgerissen und gelangt dann als Brennstoff/Luft-Gemisch über den Diffusor 20 in den Reaktionsraum 12 des Reformers 10. Dem Düsenstock 44 ist eine luftleitende Einrichtung 42 vorgeschaltet, die der in die Venturidüse 14 einströmenden Luft einen Drall aufprägt. Die luftleitende Einrichtung 42 ist als ein gegenüber der Stirnfläche 90 des Düsenstocks 44 mit Abstand angeordneter Träger 46, der beispielsweise kreisförmig gestaltet ist. Dieser bildet zusammen mit der Stirnfläche 90 des Düsenstocks 44 einen Ringspalt 86. An dem Träger 46 sind Drallschaufeln 88 angeordnet, die gegen die Stirnfläche 90 des Düsenstocks 44 gerichtet sind und in der Montagestellung daran anliegen.

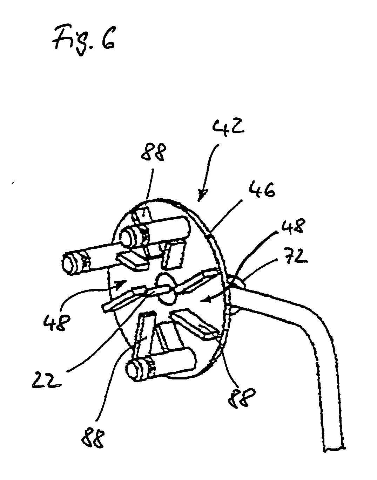

Figur 6 zeigt eine perspektivische Darstellung einer luftleitenden Einrichtung 42 zur Verwendung in einem erfindungsgemäßen System. Die Drallschaufeln 88 sind an einem Träger 46 jeweils bezüglich der Radien der kreisförmigen Anordnung versetzt angeordnet, um eine tangentiale Strömungskomponente zu erzeugen. Jeweils zwei Drallschaufeln 88 bilden zusammen mit dem Träger 46 und dem Düsenstock 44 eine konischen Kanal 48.

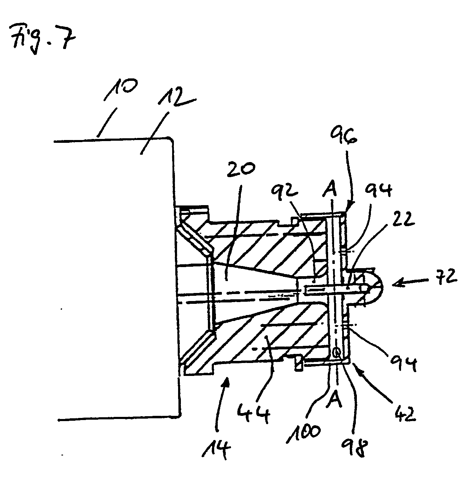

Figur 7 zeigt eine schematische Schnittansicht einer weiteren Ausführungsform eines erfindungsgemäßen Systems. Die dargestellte Ausführungsform des erfindungsgemäßen Systems unterscheidet sich von derjenigen gemäß Figur 5 darin, dass die luftleitende Einrichtung 42 als topfförmige Hülse 96 ausgebildet ist. Die Hülse 96 weist in ihrem Boden Axialbohrungen 94 auf, und in der Umfangswand 100 der Hülse 96 sind Tangentialbohrungen 98 ausgebildet. Die Hülse 96 ist an dem Düsenstock 44 der Venturidüse 14 befestigt, beispielsweise durch Aufstecken oder durch anderweitige form-, kraft- oder stoffschlüssige Verbindung. Die Axialbohrungen 94 und die Tangentialbohrungen 98 sind derart aufeinander abgestimmt, dass der einströmenden Luft ein definierter Drall verliehen wird.

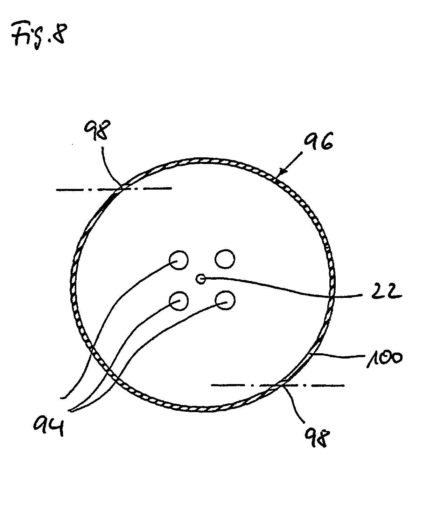

Figur 8 zeigt eine schematische Schnittansicht entlang der in Figur 7 mit A-A gekennzeichneten Querschnittsebene. Es ist eine beispielhafte Anordnung der Axialbohrungen 94 und der Tangentialbohrungen 98 in der Hülse 96 dargestellt. Durch eine Variation der Anzahl der Öffnungen beziehungsweise Bohrungen 94, 98 sowie ihrer Größe und Anordnung kann der Drall der Luftströmung bedarfsweise eingestellt werden.

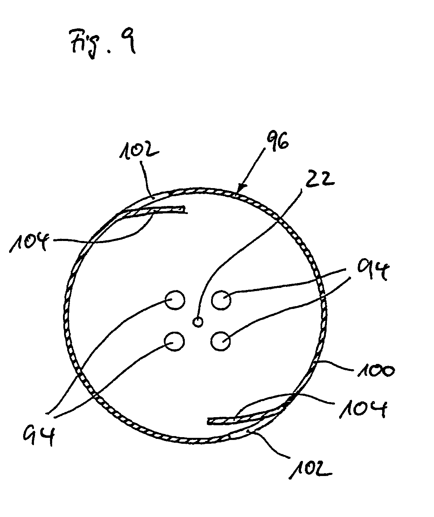

Figur 9 zeigt eine schematische Schnittansicht, entsprechend Figur 8, einer weiteren Ausführungsform einer luftleitenden Einrichtung. Die hier dargestellte Hülse 96 weist in ihrer Umfangswand 100 Luftöffnungen 102 auf, die zum Zentrum der Hülse 96 hin von einer der jeweiligen Luftöffnung 102 zugeordneten Luftleitschaufel 104 begrenzt sind. Durch die Luftleitschaufeln 104 wird der einströmenden Luft eine tangentiale Strömungskomponente aufgeprägt.

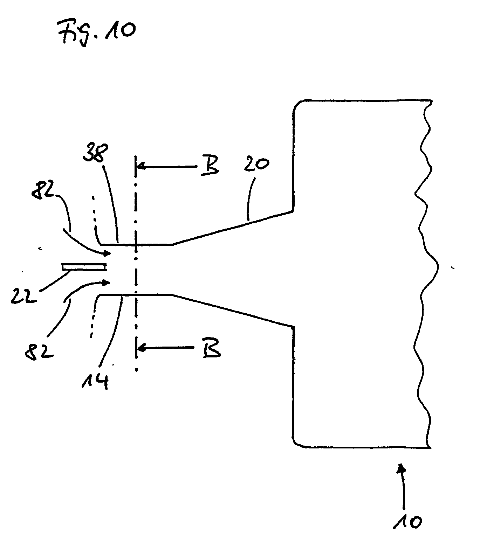

Figur 10 zeigt eine schematische Schnittansicht einer weiteren Ausführungsform eines erfindungsgemäßen Systems. Die Funktion und die Eigenschaften der dargestellten Komponenten ergeben sich unter Berücksichtigung der Bezugszeichen aus der vorangehenden Beschreibung. Die Darstellung ist stark schematisiert, so dass wesentliche Bestandteile des Systems erkennbar sind. Im zylindrischen Teil 38 der Venturidüse 14 ist die Brennstoffnadel 22 zum Zuführen von Brennstoff angeordnet. Einerseits ist es sinnvoll, die Brennstoffnadel 22 in genau diesem verengten zylindrischen Teil 38 der Venturidüse 14 anzuordnen, da die mit großer Strömungsgeschwindigkeit strömende Brennluft 82 die Zerstäubung des Brennstoffs begünstigt. Andererseits stellt die Brennstoffnadel 22 aber auch ein Strömungshindernis für die zuströmende Brennluft 82 dar. Dies ist ein grundsätzliches Problem, welches durch nachfolgend beschriebene Merkmale im Zusammenhang mit einem erfindungsgemäßen System gelöst wird. Die Linie B-B kennzeichnet eine radiale Schnittebene, auf die bei der nachfolgenden Beschreibung Bezug genommen wird.

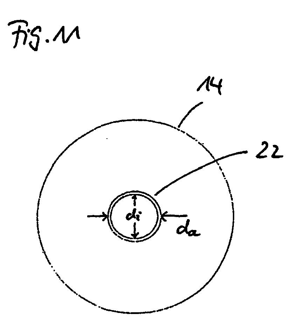

Figur 11 zeigt eine Schnittansicht entlang der in Figur 10 mit B-B gekennzeichneten Ebene. Es ist zu erkennen, auf welche Weise die vorliegende Erfindung die im Zusammenhang mit Figur 10 geschilderte Problematik löst. Indem das Verhältnis zwischen Innendurchmesser $d_i$ und Außendurchmesser $d_a$ der Brennstoffnadel 22 möglichst nahe dem Wert 1 gewählt wird, stellt die Brennstoffnadel 22 einen minimalen Strömungswiderstand für die zuströmende Brennluft in der Venturidüse 14 dar.

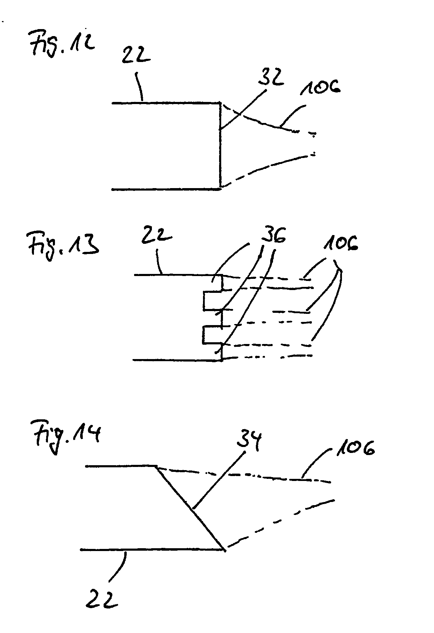

Figur 12 zeigt eine Brennstoffnadel 22 mit einer ersten Austrittsöffnung zur Verwendung in einem erfindungsgemäßen System. In diesem Fall ist die Austrittsebene 32 des Brennstoffs 106 aus der Brennstoffnadel 22 senkrecht zur Hauptströmungsrichtung des Brennstoffs 106. Dies hat eine Einschnürung des Brennstoffs 106 außerhalb der Brennstoffnadel 22 zur Folge, was mitunter im Hinblick auf eine homogene Verteilung des Brennstoffs 106 in der Venturidüse und letztlich in der Brennkammer nachteilig sein kann.

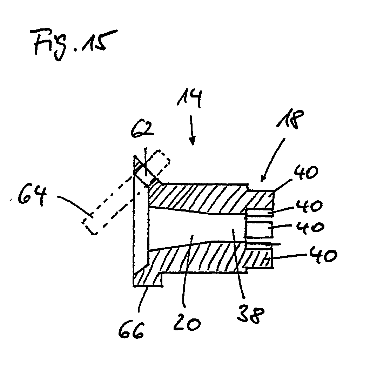

Figur 13 zeigt eine Brennstoffnadel 22 mit einer zweiten Austrittsöffnung zur Verwendung in einem erfindungsgemäßen System. Hier hat die Austrittsöffnung der Brennstoffnadel 22 Zinnen 36. Diese Zinnen 36 bündeln den austretenden Brennstoff 106 in bestimmten Bereichen, und letztlich wird erreicht, dass der Brennstoff 106 nahezu homogen über den gesamten ihm zur Verfügung stehenden Strömungsquerschnitt verteilt ist.

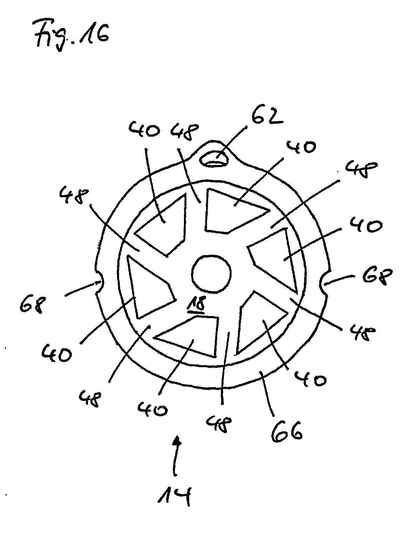

Figur 14 zeigt eine Brennstoffnadel 22 mit einer dritten Austrittsöffnung zur Verwendung in einem erfindungsgemäßen System. Hier ist eine Brennstoffnadel 22 mit einer abgeschrägten Öffnung 34 zu erkennen. Diese erteilt dem ausströmenden Brennstoff 106 eine Vorzugsrichtung, so dass beispielsweise einem Schwerkrafteffekt entgegengewirkt werden kann.

Die speziellen Ausgestaltungen von Brennstoffnadeln, die im Rahmen der vorliegenden Offenbarung beschrieben werden, können in für die Erfindung vorteilhafter Weise kombiniert werden. Beispielsweise ist es denkbar, dass eine schräge Austrittsebene mit einer zinnenartigen Struktur kombiniert wird.

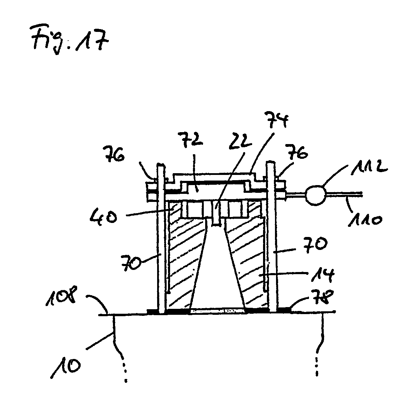

Figur 15 zeigt eine teilweise geschnittene Seitenansicht einer Ausführungsform einer Düse 14 zur Verwendung in einem erfindungsgemäßen System. Die Venturidüse 14 ist aus keramischem Material gefertigt, was die Herstellung der Düse 14 im Vergleich zu Metalldüsen vereinfacht. Im Lufteintrittsbereich 18 sind Mittel 40 zur Luftführung vorgesehen. Diese sind einstückig mit der Düse 14 ausgebildet. Insbesondere sind auch sie aus keramischen Material gefertigt. Die Luftführungselemente 40 sind so ausgerichtet, dass der zugeführten Luft ein Drall vermittelt wird, was nachfolgend mit Bezug auf Figur 16 näher erläutert wird. Die Venturidüse 14 ist weiterhin mit einer Bohrung 62 ausgestattet. In diese Bohrung 62 kann ein Glühstift 64 eingesetzt werden, der dem Zünden des in den in Figur 15 nicht dargestellten Reaktionsraum eintretenden Brennstoff/Luft-Gemisches dient. Insbesondere beim Start des erfindungsgemäßen Systems arbeitet der Reformer nach Art eines Brenners, so dass eine anfängliche Zündung des Brennstoff/Luft-Gemisches erforderlich sein kann. Vorteilhaft an der Anordnung des Glühstifts 64 in einer Bohrung 62 der Düse 14 ist, dass die Positionierung des Glühstiftes 64 bezüglich der Düse 14 festgelegt ist. Die Positionierung des Glühstiftes 64 hängt also insbesondere nicht von beliebigen anderen Bauteilen ab. Auf diese Weise können sehr geringe Toleranzen im Hinblick auf die Einbaulage des Glühstiftes 64 eingehalten werden. Die Bohrung 62 durchsetzt in vorteilhafter Weise einen in seinem Radius vergrößerten zylindrischen Ansatz 66 der Düse 14, was den Vorteil hat, dass das Strömungsverhalten der Düse 14 nur wenig von der Bohrung 62 beziehungsweise von dem in der Bohrung 62 angeordneten Glühstift 64 beeinflusst wird.

Figur 16 zeigt eine Draufsicht auf den Lufteintrittsbereich 18 einer Düse 14 zur Verwendung in einem erfindungsgemäßen System. Es ist eine mögliche Gestaltung des Lufteintrittsbereiches 18 durch Luftführungselemente 40 dargestellt. Die Luftführungselemente 40 bilden Kanäle 48 für die einströmende Luft. Diese Kanäle 48 sind bezüglich der Radien des im Wesentlichen auf einer Achse angeordneten Aufbaus so positioniert, dass ein Versatz vorliegt. Von außen einströmende Luft erfährt somit einen Drall, was vorteilhafte Eigenschaften im Hinblick auf die Zerstäubung des Brennstoffes mit sich bringt, der aus der Brennstoffnadel austritt. Weiterhin ist in der vorliegenden Darstellung die Anordnung der Öffnung 62 zur Aufnahme des Glühstiftes zu erkennen. Diese durchdringt einen im Wesentlichen zylinderförmigen Ansatz 66. Der Ansatz 66 ist weiterhin mit Ausnehmungen 68 versehen. Diese Ausnehmungen 68 definieren die Einbaulage der Düse 14, was nachfolgend mit Bezug auf Figur 17 näher erläutert wird.

Figur 17 zeigt eine schematische Schnittansicht einer weiteren Ausführungsform eines erfindungsgemäßen Systems. Ein der Düse 14 zugewandtes Ende des Reformers 10 ist dargestellt. Der Reformer 10 ist von einem Hitzeschild 108 begrenzt. An diesem Hitzeschild 108 sind bei der vorliegenden beispielhaften Ausführungsform zwei Montagebolzen 70 vorgesehen. Diese Montagebolzen 70 können an dem Hitzeschild 108 beziehungsweise an dem Reformer 10 angeschweißt sein.

Die Montagebolzen 70 definieren die Positionierung der nachfolgend beschriebenen weiteren Komponenten. Zunächst ist eine Dichtung 78 vorgesehen, die vorzugsweise aus einer Glimmerschicht und einer Grafitschicht besteht, wobei die Glimmerschicht dem Reformer 10 zugewandt ist und die Grafitschicht der Düse 14 zugewandt ist. Es folgt die Keramikdüse 14, die mit ihren in Figur 16 dargestellten Ausnehmungen 68 auf den Montagebolzen 70 sitzt. Auf die Düse 14 ist eine Brennstoffzufuhr 72, die mit der Brennstoffnadel 22 in Verbindung steht, aufgesetzt. Diese Brennstoffzufuhr 72 wird ebenfalls durch die Montagebolzen 70 positioniert. Die Brennstoffzufuhr 72 wird von einer Brennstoffleitung 110, in der ein Brennstoffsensor 112 angeordnet ist, mit Brennstoff versorgt. Auf die Brennstoffzufuhr 72 folgt eine Feder 74, die ebenfalls auf die Montagebolzen 70 aufgesetzt ist. Die Feder 74 wird durch Klemmscheiben 76, die auf den Montagebolzen 70 unverrückbar sitzen, gehalten. Die Feder 74 ist in einem gespannten Zustand dargestellt, in dem die Schenkel der Feder 74 beispielsweise parallel zur dazwischenliegenden Scheibe sind. Im entspannten Zustand der Feder 74 sind die Schenkel der Feder 74 nach oben in Richtung auf die dazwischenliegende Scheibe gebogen. Ein (nicht dargestellter) Glühstift wird in Übereinstimmung mit der in Figur 15 dargestellten Ausführungsform einer Düse 14 von dieser positioniert und von einer (nicht dargestellten) Drahtfeder gehalten, die sich an der Düse 14 abstützt.

Die Brennstoffzufuhr 72 und damit die Brennstoffnadel 22 sind auf diese Weise bezüglich der Düse 14 automatisch ausgerichtet. Es sind daher nur noch zwei Bauteile beteiligt, die die Zuführung von Brennstoff und die Vermischung des Brennstoffs mit der Brennluft beeinflussen, so dass sehr geringe Toleranzen eingehalten werden können, was zudem durch die Montageart auf den Montagebolzen 70 möglich ist. Ebenfalls kann der Glühstift exakt bezüglich Düse 14 und Reformer 10 positioniert werden.

Die Fertigung des in Figur 17 dargestellten Aufbaus ist voll automatisierbar. Insbesondere ist die Montagerichtung einheitlich axial, so dass lediglich ein "Auffädeln" der Bauteile durchgeführt werden muss. Die Dichtung 78 stellt eine Wärmeisolierung, eine Ankopplung der Düsenkeramik 14 an das Metall des Hitzeschildes 108 und einen Toleranzausgleich zur Verfügung. Der Aufbau kann in vorteilhafter Weise durch kraftgesteuertes Aufpressen der Klemmscheiben 76 auf die Montagebolzen 70 montiert werden, so dass im Hinblick auf die Wärme- und Temperatureigenschaften des Aufbaus einheitliche Voraussetzungen geschaffen werden können. Vermittelt durch die Federkraft können Toleranzen auf-grund unterschiedlicher Erwärmungen der Komponen-ten, unterschiedlicher Endtemperaturen der Komponen-ten und unterschiedlicher Temperaturausdehnungskoef-fizienten ausgeglichen werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Efindung wesentlich sein.

**Bezugszeichenliste**

| | |
|---|---|
| 10 | Reformer |
| 12 | Reaktionsraum |
| 14 | Venturidüse |
| 16 | Brennstoffzuführung |
| 18 | Lufteintrittsbereich |
| 20 | Diffusorbereich |
| 22 | Brennstoffnadel |
| 24 | Rohr |
| 26 | Zweistoffdüse |
| 28 | Venturidüse |
| 30 | Sekundärluftöffnung |
| 32 | Austrittsöffnung |
| 34 | Austrittsöffnung |
| 36 | Zinnen |
| 38 | zylindrischer Teil |
| 40 | Mittel zur Luftführung |
| 42 | luftleitende Einrichtung |
| 44 | Düsenstock |
| 46 | Träger |
| 48 | Kanal |
| 62 | Bohrung |
| 64 | Glühstift |
| 66 | zylindrischer Ansatz |
| 68 | Ausnehmung |
| 70 | Montagebolzen |
| 72 | Brennstoffzufuhr |
| 74 | Feder |
| 76 | Klemmscheiben |
| 78 | Dichtung |
| 80 | Öffnung |
| 82 | Luft |
| 84 | Brennstoffaustritt |
| 86 | Ringspalt |
| 88 | Drallschaufel |
| 90 | Stirnfläche |
| 92 | Lufteinströmkanal |
| 94 | Axialbohrung |
| 96 | Hülse |
| 98 | Tangentialbohrung |
| 100 | Umfangswand |
| 102 | Luftöffnung |
| 104 | Luftleitschaufel |
| 106 | Brennstoff |
| 108 | Hitzeschild |
| 110 | Brennstoffleitung |
| 112 | Brennstoffsensor |
| 210 | elektrische Leistung |
| 212 | Brennstoffzelle |
| 214 | Reformer |
| 216 | Brennstoff |
| 218 | Luft |
| 220 | Reformat |
| 222 | Ventileinrichtung |
| 224 | Anode |
| 226 | Gebläse |
| 228 | Kathodenzuluft |
| 230 | Kathode |
| 232 | Brenner |
| 234 | Anodenabgas |
| 236 | Kathodenabluft |
| 238 | Wärmetauscher |
| 240 | Pumpe |
| 242 | Gebläse |
| 250 | Abgas |

**Patentansprüche**

1. System zum Umsetzen von Brennstoff und Luft zu Reformat mit

   - einem Reformer (10), der einen Reaktionsraum (12) aufweist,
   - einer Düse (14) zum Zuführen eines Brennstoff/Luft-Gemisches zu dem Reaktionsraum (12) und
   - einer Brennstoffzuführung (16) zum Zuführen von Brennstoff in die Düse (14),
   - wobei in einem Lufteintrittsbereich (18) der Düse (14) Mittel (40) zur Luftführung vorgesehen sind, die der zuströmenden Luft einen Drall vermitteln, und
   - wobei die Düse (14) eine Venturidüse mit einem Lufteintrittsbereich (18) und einem sich bezüglich des Lufteintrittsbereiches (18) stromabwärts erstreckenden Diffusorbereich (20) ist,

   **dadurch gekennzeichnet, dass** die Düse (14) aus keramischen Material besteht und dass die Mittel (40) zur Luftführung einstückig mit der Düse ausgebildet sind.

2. System nach Anspruch 1, **dadurch gekennzeichnet, dass** die Mittel (40) zur Luftführung eine luftleitende Einrichtung (42) mit Drallschaufeln (88.) umfassen.

3. System nach Anspruch 2, **dadurch gekennzeichnet,**

   - **dass** die Drallschaufeln (88) auf einem an einem Düsenstock (44) angebrachten Träger (46) angeordnet sind und
   - **dass** jeweils zwei Drallschaufeln (88) zusammen mit dem Träger (46) und dem Düsenstock (44) einen konischen Kanal (48) bilden.

4. System nach Anspruch 2 oder 3, **dadurch gekennzeichnet**,- dass die luftleitende Einrichtung (42) eine an dem Düsenstock (44) befestigte topfförmige Hülse (96) mit darin ausgebildeten axialen Luftöffnungen (94) und in einer Umfangswand (100) gebildeten Umfangsluftöffnungen (98, 102) aufweist.

5.  System nach Anspruch 4, **dadurch gekennzeichnet, dass** die Umfangsluftöffnungen (98) nahezu tangential zur Umfangswand (100) gebildete Bohrungen sind.

6.  System nach Anspruch 4 oder 5, **dadurch gekennzeichnet, dass** an den Umfangsluftöffnungen (102) Luftleitschaufeln (104) angeordnet sind.

7.  System nach einem der vorhergehenden Ansprüche, **dadurch gekennzeichnet, dass** der Öffnungswinkel des Diffusorbereiches (20) veränderlich ist.

8.  System nach einem der vorhergehenden Ansprüche, **dadurch gekennzeichnet, dass** der Venturidüse (14) flüssiger Brennstoff in der Nähe des Lufteintrittsbereiches (18) durch eine Nadel (22) zugeführt wird.

9.  System nach einem der vorhergehenden Ansprüche, **dadurch gekennzeichnet, dass** die Brennstoffzuführung (16) ein Rohr (24) und eine Zweistoffdüse (26, 28) umfasst, so dass der Venturidüse (14) ein Brennstoff/Luft-Gemisch zugeführt wird.

10. System nach Anspruch 9, **dadurch gekennzeichnet, dass** die Zweistoffdüse eine weitere Venturidüse (28) ist.

11. System nach einem der vorhergehenden Ansprüche, **dadurch gekennzeichnet, dass** Mittel (30) vorgesehen sind, so dass in den Reaktionsraum (12) Sekundärluft einströmen kann.

12. System nach einem der vorhergehenden Ansprüche, **dadurch gekennzeichnet,**

    - **dass** die Brennstoffzuführung (16) eine Brennstoffnadel (22) umfasst und
    - **dass** für das Verhältnis von Innendurchmesser ($d_i$) zu Außendurchmesser ($d_a$) der Brennstoffnadel (22) gilt:

$$0{,}7 \le \frac{d_i}{d_a} < 1.$$

13. System nach einem der vorhergehenden Ansprüche, **dadurch gekennzeichnet,**

- **dass** die Venturidüse (14) axialsymmetrisch ist und
- **dass** die Brennstoffnadel (22) axial ausgerichtet ist.

14. System nach einem der vorhergehenden Ansprüche, **dadurch gekennzeichnet, dass** die Austrittsebene (32) des flüssigen Brennstoffs aus einer Brennstoffnadel (22) senkrecht zur Strömungsrichtung des flüssigen Brennstoffs durch die Brennstoffnadel (22) verläuft.

15. System nach einem der vorhergehenden Ansprüche, **dadurch gekennzeichnet, dass** die Austrittsebene (34) des flüssigen Brennstoffs aus einer Brennstoffnadel (22) schräg zur Strömungsrichtung des flüssigen Brennstoffs durch die Brennstoffnadel (22) verläuft.

16. System nach einem der vorhergehenden Ansprüche, **dadurch gekennzeichnet, dass** die Austrittsöffnung einer Brennstoffnadel (22) mit Spitzen und/oder Zinnen (36) versehen ist.

17. System nach einem der vorhergehenden-Ansprüche, **dadurch gekennzeichnet,**

    - **dass** der Lufteintrittsbereich (18) einen im Wesentlichen zylindrischen Teil (38) aufweist, der einen Übergang zu dem Diffusorbereich (20) aufweist,
    - **dass** die Austrittsöffnung einer Brennstoffnadel (22) in dem zylindrischen Teil (38) angeordnet ist und
    - **dass** ein axialer Abstand zwischen der Austrittsöffnung der Brennstoffnadel (22) und dem Übergang vorliegt.

18. System nach einem der vorhergehenden Ansprüche, **dadurch gekennzeichnet, dass** es bezüglich mindestens einer Einbaumöglichkeit des Reformers (10) in ein Kraftfahrzeug so ausgelegt ist, dass sich die Öffnung einer Brennstoffnadel (22) oberhalb der Achse der Venturidüse (14) befindet.

19. System nach einem der vorhergehenden Ansprüche, **dadurch gekennzeichnet, dass** die Düse (14) Mittel zum Halten eines Glühstifts (64) aufweist.

20. System nach einem der vorhergehenden Ansprüche, **dadurch gekennzeichnet,**

    - **dass** die Düse (14) zumindest teilweise eine im Wesentlichen zylindrische Gestalt hat und
    - **dass** die Mittel (40) zur Luftführung Kanäle (48) bilden, die bezüglich der radialen Richtungen versetzt sind.

**21.** System nach einem der vorhergehenden Ansprüche, **dadurch gekennzeichnet, dass** die Mittel (40) zur Luftführung im Wesentlichen dreieckige Grundflächen aufweisen, wobei die Ecken abgerundet sind.

**22.** System nach einem der vorhergehenden Ansprüche, **dadurch gekennzeichnet, dass** die Mittel zum Halten des Glühstifts (64) als schräg zur Zylinderachse verlaufende Bohrung (62) realisiert sind.

**23.** System nach einem der vorhergehenden Ansprüche, **dadurch gekennzeichnet,**

- **dass** ein zumindest im Wesentlichen zylindrischer Teil der Düse (14) einen im Wesentlichen zylindrischen Ansatz (66) mit vergrößertem Durchmesser aufweist und
- **dass** die Mittel zum Halten des Glühstifts (64) als schräg zur Zylinderachse verlaufende, den Ansatz durchdringende Bohrung (62) realisiert sind.

**24.** System nach einem der vorhergehenden Ansprüche, **dadurch gekennzeichnet,**

- **dass** ein zumindest im Wesentlichen zylindrischer Teil der Düse (14) einen im Wesentlichen zylindrischen Ansatz (66) mit vergrößertem Durchmesser aufweist und
- **dass** der zylindrische Ansatz (66) Ausnehmungen (68) zur Aufnahme von Montagebolzen (70) aufweist.

**25.** System nach einem der vorhergehenden Ansprüche, **dadurch gekennzeichnet,**

- **dass** der Reformer (10), die Düse (14) und die Brennstoffzufuhr (72) auf einer Achse angeordnet sind,
- **dass** Mittel (74) zum Halten der Düse (14) und der Brennstoffzufuhr (72) vorgesehen sind,
- **dass** mindestens zwei axial ausgerichtete Montagebolzen (70) vorgesehen sind, die an dem Reformer (10) befestigt sind,
- **dass** die Düse (14) und die Brennstoffzufuhr (72) Positioniereinrichtungen umfassen, die mit den Montagebolzen (70) zusammenwirken,
- **dass** die Mittel (74) zum Halten der Komponenten mit den Montagebolzen (70) zusammenwirken und
- **dass** der Reformer (10), die Düse (14), die Brennstoffzufuhr (72) und die Mittel (74) zum Halten der Komponenten axial aufeinanderfolgend angeordnet sind.

**26.** System nach Anspruch 25, **dadurch gekennzeichnet, dass** die Mittel zum Halten der Komponenten als Feder (74) ausgebildet sind, die auf den Montagebolzen (70) durch Klemmscheiben (76) gehalten wird.

**27.** System nach Anspruch 25 oder 26, **dadurch gekennzeichnet, dass** die Montagebolzen (70) an dem Reformer (10) angeschweißt sind.

**28.** System nach einem der vorhergehenden Ansprüche, **dadurch gekennzeichnet, dass** zwischen Düse (14) und Reformer (10) eine Dichtung (78) vorgesehen ist.

**29.** System nach Anspruch 28, **dadurch gekennzeichnet, dass** die Dichtung (78) mindestens eine dem Reformer (10) zugewandte Glimmerschicht und mindestens eine der Düse (14) zugewandte.Grafitschicht aufweist.

**30.** System nach einem der vorhergehenden Ansprüche, **dadurch gekennzeichnet, dass** die Brennstoffzufuhr. (72) ein Metallgestrick aufweist.

**31.** Verfahren zur Montage eines Systems nach einem der vorhergehenden Ansprüche, wobei mindestens zwei Montagebolzen (70) vorgesehen sind, bei dem

- eine Düse (14) in axialer Richtung auf die Montagebolzen (70) geführt wird,
- eine Brennstoffzufuhr (72) in axialer Richtung auf die Montagebolzen (70) geführt wird und
- Mittel (74) zum Halten der Komponenten in axialer Richtung auf die Montagebolzen (70) geführt werden.

**32.** Verfahren nach Anspruch 31, **dadurch gekennzeichnet, dass** vor dem Führen der Düse (14) auf die Montagebolzen (70) eine Dichtung (78) in axialer Richtung auf die Montagebolzen (70) geführt wird.

**33.** Verfahren nach Anspruch 31 oder 32, **dadurch gekennzeichnet,**

- **dass** als Mittel zum Halten der Komponenten eine Feder (74) verwendet wird und
- **dass** die Feder (74) unter Mitwirkung von Klemmscheiben (76), die die Feder (74) in ihrer Endposition fixieren, kraftgesteuert auf die Montagebolzen (70) geführt wird.

## Claims

**1.** A system for converting fuel and air into reformate having

- a reformer (10) which has a reaction space (12),

- a nozzle (14) for supplying a fuel/air mixture to the reaction space (12), and
- a fuel feed (16) for supplying fuel into the nozzle (14),
- wherein air guidance means (40) are provided in an air inlet area (18) of the nozzle (14) which impart a swirl to the inflowing air, and
- wherein the nozzle (14) is a Venturi nozzle with an air inlet area (18) and a diffuser area (20) which extends downstream with respect to the air inlet area (18),

**characterized in that** the nozzle (14) consists of ceramic material and **in that** the air guidance means (40) are made in one piece with the nozzle (14).

2. The system as claimed in claim 1, **characterized in that** the air guidance means (40) comprise an air-guiding device (42) with swirl blades (88).

3. The system as claimed in claim 2, **characterized in that**

- the swirl blades (88) are located on a carrier (46) mounted on the nozzle assembly (44) and
- **in that** respectively two swirl blades (88) together with the carrier (46) and the nozzle assembly (44) form a conical channel (48).

4. The system as claimed in claim 2 or 3, **characterized in that** the air-guiding device (42) has a pot-shaped sleeve (96) attached to the nozzle assembly (44) and having axial air holes (94) formed in it and peripheral air holes (98, 102) formed in the peripheral wall (100).

5. The system as claimed in claim 4, **characterized in that** the peripheral air holes (98) are holes which are formed nearly tangentially to the peripheral wall (100).

6. The system as claimed in claim 4 or 5, **characterized in that** air guide blades (104) are arranged on the peripheral air holes (102).

7. The system as claimed in one of the preceding claims, **characterized in that** the opening angle of the diffuser area (20) is variable.

8. The system as claimed in one of the preceding claims, **characterized in that** the Venturi nozzle (14) is supplied with liquid fuel in the vicinity of the air inlet area (18) by a needle (22).

9. The system as claimed in one of the preceding claims, **characterized in that** the fuel feed (16) comprises a pipe (24) and a binary nozzle (26, 28) so that the Venturi nozzle (14) is supplied with a fuel/air mixture.

10. The system as claimed in claim 9, **characterized in that** the binary nozzle is another Venturi nozzle.

11. The system as claimed in one of the preceding claims, **characterized in that** means (30) are provided so that secondary air may flow into the reaction space (12).

12. The system as claimed in one of the preceding claims, **characterized in that**

- the fuel feed (16) comprises a fuel needle (22) and
- the ratio of the inside diameter ($d_i$) to the outside diameter ($d_a$) of the fuel needle satisfies

$$0,7 \leq \frac{d_i}{d_a} < 1.$$

13. The system as claimed in one of the preceding claims, **characterized in that**

- the Venturi nozzle (14) is axially symmetrical and
- the fuel needle (22) is aligned axially.

14. The system as claimed in one of the preceding claims, **characterized in that** the exit plane (32) of the liquid fuel runs from a fuel needle (22) perpendicularly to the flow direction of the liquid fuel through the fuel needle (22).

15. The system as claimed in one of the preceding claims, **characterized in that** the exit plane (34) of the liquid fuel runs from a fuel needle (22) obliquely to the flow direction of the liquid fuel threw the fuel needle (22).

16. The system as claimed in one of the preceding claims, **characterized in that** the outlet opening of a fuel needle (22) is provided with tips and/or crenelations (36).

17. The system as claimed in one of the preceding claims, **characterized in that**

- the air inlet area (18) has an essentially cylindrical part (38) which has a transition to the diffuser area (20),
- the exit opening of a fuel needle (22) is located in the cylindrical part (38), and
- there is an axial distance between the exit opening of the fuel needle (22) and the transition.

**18.** The system as claimed in one of the preceding claims, **characterized in that** it is designed with respect to at least one installation possibility of the reformer (10) in a motor vehicle so that the opening of a fuel needle (22) is located above the exit of the Venturi nozzle (14).

**19.** The system as claimed in one of the preceding claims, **characterized in that** the nozzle (14) has means for holding a glow pin (64).

**20.** The system as claimed in one of the preceding claims, **characterized in that**

- the nozzle (14) has at least partially an essentially cylindrical shape and
- the air guidance means (40) form channels (48) which are offset with respect to the radial directions.

**21.** The system as claimed in one of the preceding claims, **characterized in that** the air guidance means (40) have essentially triangular base surfaces, the corners being rounded.

**22.** The system as claimed in one of the preceding claims, **characterized in that** the means for holding the glow pin (64) are made as a hole (62) which runs slanted to the cylinder axis.

**23.** The system as claimed in one of the preceding claims, **characterized in that**

- an at least essentially cylindrical part of the nozzle (14) has an essentially cylindrical shoulder (66) with an enlarged diameter and
- the means for holding the glow pin (64) are made as a hole (62) which penetrates the shoulder and which runs slanted to the cylinder axis.

**24.** The system as claimed in one of the preceding claims, **characterized in that**

- an at least essentially cylindrical part of the nozzle (14) has an essentially cylindrical shoulder (66) having an enlarged diameter, and
- the cylindrical shoulder (66) has recesses (68) for holding mounting pins (70).

**25.** The system as claimed in one of the preceding claims, **characterized in that**

- the reformer (10), the nozzle (14), and the fuel feed (72) are located on an axis,
- means (74) for holding the nozzle (14) and the fuel feed (72) are provided,
- at least two axially aligned mounting pins (70) which are mounted on the reformer (10) are provided,
- the nozzle (14) and the fuel feed (72) comprise positioning means which interact with the mounting pins (70) .
- the means (74) for holding the components interact with the mounting pins (70), and
- the reformer (10), the nozzle (14), the fuel feed (72), and the means (74) for holding the components are located axially in succession.

**26.** The system as claimed in claim 25, **characterized in that** the means for holding the components are made as a spring (74) which is held on the mounting pins (70) by clamp disks (76).

**27.** The system as claimed in claim 25 or 26, **characterized in that** the mounting pins (70) are welded to the reformer (10) .

**28.** The system as claimed in one of the preceding claims, **characterized in that** a seal (78) is provided between the nozzle (14) and the reformer (10).

**29.** The system as claimed in claim 28, **characterized in that** the seal (78) has at least one mica layer facing the reformer (10) and at least one graphite layer facing the nozzle (14).

**30.** The system as claimed in one of the preceding claims, **characterized in that** the fuel feed (72) has a metal mesh.

**31.** A method for mounting a system as claimed in one of the preceding claims, wherein at least two mounting pins (70) are provided, in which

- one nozzle (14) is guided in the axial direction onto the mounting pins (70),
- a fuel feed (72) is guided in the axial direction onto the mounting pins (70), and
- means (74) for holding the components are guided in the axial direction onto the mounting pins (70).

**32.** The method as claimed in claim 31, **characterized in that** a seal (78) is guided in the axial direction onto the mounting pins (70) before the nozzle (14) is guided onto the mounting pins (70).

**33.** The method as claimed in claim 31 or 32, **characterized in that**

- a spring (74) is used as means for holding the components, and
- the spring (74) is guided in a force-controlled manner onto the mounting pins (70) with the interaction of clamp disks (76) which fix the spring (74) in its end position.

**Revendications**

1. Système pour convertir du combustible et de l'air en reformat avec:

   - un reformeur (10) ayant une chambre de réaction (12),
   - une buse (14) pour amener un mélange de combustible et d'air dans la chambre de réaction (12), et
   - une amenée de combustible (16) pour amener du combustible dans la buse (14),
   - où des moyens de conduit d'air (40), qui transmettent une torsion à l'air entrant, sont prévus dans une zone d'entrée d'air (18) de la buse (14), et
   - la buse (14) étant une buse Venturi ayant une zone d'entrée d'air (18) et une zone de diffuseur (20) s'étendant en aval de la zone d'entrée d'air (18),

   **caractérisé en ce que** la buse (14) consiste de matériel céramique et les moyens de conduit d'air (40) sont formés en pièce unique avec la buse.

2. Système selon la revendication 1, **caractérisé en ce que** les moyens de conduit d'air (40) comprennent un dispositif (42) conducteur d'air ayant des aubes à torsion (88).

3. Système selon la revendication 2, **caractérisé en ce que**

   - les aubes à torsion (88) sont agencées sur un support (46) agencé sur un porte-buse (44) et
   - respectivement deux aubes à torsion (88) forment avec le support (46) et le porte-buse (44) un canal conique (48).

4. Système selon la revendication 2 ou 3, **caractérisé en ce que** le dispositif conducteur d'air (42) comporte une douille (96) de la forme d'un pot, la douille (96) étant attaché au porte-buse (44) et ayant des orifices d'air (94) axiaux formés dans elle et des orifices d'air de périmètre (98, 102) formés dans une paroi de périmètre (100).

5. Système selon la revendication 4, **caractérisé en ce que** les orifices d'air de périmètre (98) sont des percées formées à peu près tangentiellement à la paroi de périmètre (100) .

6. Système selon l'une des revendications 4 ou 5, **caractérisé en ce que** des aubes de conduit d'air (104) sont agencées aux orifices d'air de périmètre (102).

7. Système selon l'une des revendications précédentes, **caractérisé en ce que** l'angle d'ouverture de la zone de diffuseur (20) est variable.

8. Système selon l'une des revendications précédentes, **caractérisé en ce que** du combustible liquide est amené à la buse Venturi (14) près de la zone d'entrée d'air (18) par l'aiguille (22).

9. Système selon l'une des revendications précédentes, **caractérisé en ce que** l'amenée de combustible (16) comprend une tube (24) et une buse à deux fluides (26, 28), de sorte qu'un mélange de combustible et d'air est amené à la buse Venturi (14).

10. Système selon la revendication 9, **caractérisé en ce que** la buse à deux fluides est une autre buse Venturi (28).

11. Système selon l'une des revendications précédentes, **caractérisé en ce que** des moyens (30) sont prévus de sorte que de l'air secondaire peut entrer dans la chambre de réaction (12).

12. Système selon l'une des revendications précédentes, **caractérisé en ce que**

    - l'amenée de combustible (16) comprend une aiguille de combustible (22) et
    - le rapport entre le diamètre intérieur ($d_i$) et le diamètre extérieur ($d_a$) de l'aiguille de combustible (22) satisfait à la relation:

    $$0,7 \leq \frac{d_i}{d_a} < 1.$$

13. Système selon l'une des revendications précédentes, **caractérisé en ce que**

    - la buse Venturi (14) est symétrique par son axe et
    - l'aiguille de combustible (22) est alignée axialement.

14. Système selon l'une des revendications précédentes, **caractérisé en ce que** le plan de sortie (32) du combustible liquide passe d'une aiguille de combustible (22) verticalement à la direction d'écoulement du combustible liquide à travers l'aiguille de combustible (22).

15. Système selon l'une des revendications précédentes, **caractérisé en ce que** le plan de sortie (34) du combustible liquide sortant passe d'une aiguille de combustible (22) obliquement à la direction d'écoulement du combustible liquide à travers l'aiguille de combustible (22).

**16.** Système selon l'une des revendications précédentes, **caractérisé en ce que** l'orifice de sortie d'une aiguille de combustible (22) est doté de pointes et/ou de créneaux (36).

**17.** Système selon l'une des revendications précédentes, **caractérisé en ce que**

- la zone d'entrée d'air (18) comporte une partie (38) essentiellement cylindrique ayant une transition vers la zone de diffuseur (20),
- l'orifice de sortie d'une aiguille de combustible (22) est agencé dans la partie cylindrique (38) et
- une distance axiale existe entre l'orifice de sortie de l'aiguille de combustible (22) et la transition.

**18.** Système selon l'une des revendications précédentes, **caractérisé en ce qu'**il est conçu relativement à au moins une possibilité d'installation du reformeur (10) dans un véhicule motorisé de sorte que l'orifice d'une aiguille de combustible (22) se trouve au-dessus de l'axe de la buse Venturi (14).

**19.** Système selon l'une des revendications précédentes, **caractérisé en ce que** la buse (14) comprend des moyens pour porter une goupille d'incandescence (64).

**20.** Système selon l'une des revendications précédentes, **caractérisé en ce que**

- la buse (14) a, du moins partiellement, une forme essentiellement cylindrique et
- les moyens de conduit d'air (40) forment des canaux (48) décalés par rapport aux directions radiales.

**21.** Système selon l'une des revendications précédentes, **caractérisé en ce que** les moyens de conduit d'air (40) comportent des surfaces de base essentiellement triangulaires dont les coins sont arrondis.

**22.** Système selon l'une des revendications précédentes, **caractérisé en ce que** les moyens pour porter la goupille d'incandescence (64) sont réalisés sous forme d'une percée (62) passant obliquement à l'axe du cylindre.

**23.** Système selon l'une des revendications précédentes, **caractérisé en ce que**

- une partie du moins essentiellement cylindrique de la buse (14) comporte une rallonge (66) du moins essentiellement cylindrique de diamètre élargi, et
- les moyens pour porter la goupille d'incandescence (64) sont réalisés sous forme d'une percée passant obliquement à l'axe du cylindre et pénétrant la rallonge.

**24.** Système selon l'une des revendications précédentes, **caractérisé en ce que**

- une partie du moins essentiellement cylindrique de la buse (14) comporte une rallonge (66) essentiellement cylindrique de diamètre élargi et
- la rallonge (66) cylindrique comporte des creuses (68) pour recevoir des boulons de montage (70).

**25.** Système selon l'une des revendications précédentes, **caractérisé en ce que**

- le reformeur (10), la buse (14) et l'amenée de combustible (72) sont agencés sur un axe,
- des moyens (74) pour porter la buse (14) et l'amenée de combustible (72) sont prévus,
- au moins deux boulons de montage (70), alignés axialement et attachés au reformeur (10), sont prévus,
- la buse (14) et l'amenée de combustible (72) comprennent des dispositifs de positionnement qui co-agissent avec les boulons de montage (70),
- les moyens (74) pour porter les composants co-agissent avec les boulons de montage (70),
- le reformeur (10), la buse (14), l'amenée de combustible (72) et les moyens (74) pour porter les composants sont agencés axialement de façon successive.

**26.** Système selon la revendication 25, **caractérisé en ce que** les moyens pour porter les composants sont réalisés sous forme d'un ressort (74) tenu sur les boulons de montage (70) par des disques à serrer (76).

**27.** Système selon la revendication 25 ou 26, **caractérisé en ce que** les boulons de montage (70) sont soudés au reformeur (10).

**28.** Système selon l'une des revendications précédentes, **caractérisé en ce qu'**un joint d'étanchéité (78) est prévu entre la buse (14) et le reformeur (10).

**29.** Système selon la revendication 28, **caractérisé en ce que** le joint d'étanchéité (78) comporte au moins une couche de mica tournée vers le reformeur (10) et au moins une couche de graphite tournée vers la buse (14).

**30.** Système selon l'une des revendications précédentes, **caractérisé en ce que** l'amenée de combustible (72) comporte un tricotage de métal.

**EP 1 423 190 B1**

**31.** Procédé pour monter un système selon l'une des revendications précédentes, où au moins deux boulons de montage (70) sont prévus, dans lequel:

   - une buse (14) est conduite en direction axiale sur les boulons de montage (70),
   - une amenée de combustible (72) est conduite sur les boulons de montage (70) en direction axiale, et
   - des moyens (74) pour porter des composants sont conduits sur les boulons de montage (70) en direction axiale.

**32.** Procédé selon la revendication 31, **caractérisé en ce qu'**un joint d'étanchéité (78) est conduit sur les boulons de montage (70) en direction axiale avant que la buse (14) soit conduite sur les boulons de montage (70).

**33.** Procédé selon la revendication 31 ou 32, **caractérisé en ce que**

   - un ressort (74) est utilisé comme moyen pour porter les composants, et
   - le ressort (74) est conduit sur les boulons de montage (70) de manière contrôlée par force, avec le concours de disques à serrer (76) qui fixent le ressort (74) dans sa position finale.

Fig.1

Fig. 2

Fig. 3

Fig. 4

Fig.5

Fig. 6

EP 1 423 190 B1

Fig. 7

Fig.8

Fig. 9

Fig. 10

Fig. 11

Fig. 12

22

32  106

Fig. 13

22  36  106

Fig. 14

34  106

22

Fig. 15

Fig. 16

Fig. 17

**EP 1 423 190 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4059415 A